# FASCICULE DE BREVET EUROPEEN

(11) **EP 3 479 047 B1**
(45) Date de publication et mention de la délivrance du brevet: **28.10.2020**
(21) Numéro de dépôt: 17732475.3
(22) Date de dépôt: 28.06.2017
(51) Int. Cl.: F28F 9/007, F28D 9/00, B64D 13/00

(54) **DISPOSITIF D'ÉCHANGE THERMIQUE COMPRENANT AU MOINS UN DISPOSITIF RAIDISSEUR, SYSTÈME DE CONDITIONNEMENT D'AIR ET VÉHICULE**
WÄRMETAUSCHVORRICHTUNG MIT MINDESTENS EINER VERSTEIFUNGSVORRICHTUNG, KLIMAANLAGE UND FAHRZEUG
HEAT EXCHANGE DEVICE COMPRISING AT LEAST ONE STIFFENING DEVICE, AIR-CONDITIONING SYSTEM AND VEHICLE

(30) Priorité: 29.06.2016 FR 1656128
(43) Date de publication de la demande: 08.05.2019
(73) Titulaire: Liebherr-Aerospace Toulouse SAS, 31200 Toulouse (FR)
(72) Inventeur: BLARY, Jean-Raymond, 31200 Toulouse (FR); DEVALLIERE, Nicolas, 31700 Blagnac (FR); LETELLIER, Vincent, 31200 Toulouse (FR)
(74) Mandataire: Cabinet BARRE LAFORGUE & associés
(86) Numéro de dépôt international: PCT/EP2017/066051
(87) Numéro de publication internationale: WO 2018/002171

(56) Documents cités:
- EP-A1- 2 339 280
- WO-A2-02/18758
- WO-A2-2008/138803
- DE-A1-102004 035 448
- GB-A- 2 127 535
- US-A- 3 986 549
- US-A- 4 511 106
- US-A- 4 852 640

## Description

L'invention concerne un dispositif d'échange thermique, notamment un échangeur de chaleur pour un aéronef, comprenant au moins un dispositif raidisseur. Un dispositif selon le préambule de la revendication 1 est connu du document US 3 986 549.

L'invention concerne en particulier un dispositif d'échange thermique à plaques, deux fluides caloporteurs différents circulant entre lesdites plaques de façon à refroidir ou à réchauffer un premier fluide à l'aide d'un deuxième fluide, les deux fluides étant séparés l'un de l'autre par des plaques au contact desquelles s'effectue ledit échange thermique.

Les échangeurs de chaleur à plaques intégrés dans des véhicules atmosphériques sont souvent soumis à des couplages vibratoires importants et susceptibles d'endommager les composants de l'échangeur de chaleur, en particulier l'assemblage de plaques au contact desquelles circulent les fluides caloporteurs.

En particulier, dans un avion, les échangeurs de chaleur subissent des couplages vibratoires avec les moteurs entraînant des déformations répétées du faisceau de plaques contenues dans l'échangeur de chaleur. Ces sollicitations répétées font encourir des risques de rupture prématurée des éléments du faisceau et d'apparition de fuites de fluide circulant dans l'échangeur.

Le montage et l'intégration d'un échangeur de chaleur dans un véhicule, et notamment dans un aéronef, sont contraints par le fait que l'espace alloué au dispositif d'échange thermique dans le véhicule est particulièrement limité et difficile d'accès.

US 2002/0174978 décrit par exemple un échangeur de chaleur comprenant des tubes insérés à l'intérieur du bloc échangeur et au contact des plaques afin d'en augmenter la rigidité et de transmettre certaines charges.

Cependant, un tel dispositif présente pour inconvénients la nécessité de modifier la structure du bloc échangeur et rend plus complexe sa conception et sa fabrication.

US 3 986 549 décrit un échangeur de chaleur comprenant quatre blocs échangeurs comprenant chacune un empilement d'ailettes ondulées de forme générale plane. Les quatre blocs échangeurs sont juxtaposés deux à deux. Quatre cadres rectangulaires sont respectivement disposés sur quatre faces, opposées deux à deux, de l'ensemble formé par les quatre blocs échangeurs. Chaque cadre présente des montants permettant de délimiter la bordure externe de chacune des entrées et des sorties de flux de fluide desdits quatre blocs échangeurs.

GB 2 127 535 décrit un échangeur de chaleur comprenant quatre blocs échangeurs à plaques superposés et juxtaposés. Deux panneaux rectangulaires, présentant quatre ouvertures rectangulaires disposées en face des entrées et sorties de fluide de chacun des quatre blocs échangeurs, sont fixés à un cadre rectangulaire.

DE 10 2004 035448 décrit un échangeur de chaleur à plaques comprenant une pluralité de canaux de guidage montés en parallèle les uns aux autres au moyen de canaux d'assemblage, les plaques étant connectées l'une à l'autre de manière hermétique au niveau de leurs bords.

WO 2008/138803 décrit une chaudière comprenant un brûleur, une conduite d'évacuation et un échangeur de chaleur comprenant une pluralité de modules placés côte à côte définissant une chambre de combustion. Des éléments de renforcements sont plaqués sur certaines des parois externes de la chaudière.

De tels dispositifs ne permettent pas d'augmenter de façon satisfaisante la rigidité.

L'invention vise donc à proposer un dispositif d'échange thermique permettant de pallier ces inconvénients.

Pour ce faire, l'invention concerne un dispositif d'échange thermique comprenant :
- une enceinte de circulation délimitée par au moins deux plaques latérales, dites plaques externes,
- une armature d'entrée, présentant au moins une entrée, dite première entrée, d'un premier fluide caloporteur dans l'enceinte de circulation,
- une armature de sortie, présentant au moins une sortie, dite première sortie, du premier fluide caloporteur hors de l'enceinte,
   l'armature d'entrée et l'armature de sortie étant reliées entre elles par chacune des plaques externes et adaptés pour permettre la circulation d'un premier flux de fluide caloporteur dans ladite enceinte de circulation selon une direction, dite direction principale de circulation du premier fluide, entre la première entrée et la première sortie,
- une deuxième entrée, entre l'armature d'entrée et l'armature de sortie, d'un deuxième fluide caloporteur dans l'enceinte de circulation,
- une deuxième sortie, entre l'armature d'entrée et l'armature de sortie, du deuxième fluide caloporteur hors de l'enceinte de circulation,
- un passage, dit passage du deuxième fluide caloporteur, permettant la circulation d'un flux du deuxième fluide caloporteur dans l'enceinte de circulation entre la deuxième entrée et la deuxième sortie,
- un bloc échangeur à plaques disposé dans l'enceinte de circulation de façon à être en communication de fluide avec les entrées et les sorties pour permettre la circulation du premier fluide caloporteur et du deuxième fluide caloporteur dans et à travers ce bloc échangeur et le transfert de calories entre eux, caractérisé en ce qu'il comprend au moins un dispositif raidisseur dudit dispositif d'échange thermique, ledit dispositif raidisseur :
- reliant mécaniquement l'armature d'entrée et l'armature de sortie,
- comprenant au moins une barre de renforcement disposée de façon à s'étendre entre l'armature d'entrée et l'armature de sortie en formant un angle non nul par rapport à la direction principale de circulation du premier fluide, chaque barre présentant au moins un point de fixation sur l'armature d'entrée et au moins un point de fixation sur l'armature de sortie,
- étant adapté pour :
   ∘ augmenter la raideur de l'enceinte de circulation vis-à-vis des déplacements en translation de l'armature d'entrée et de l'armature de sortie l'un par rapport à l'autre selon une direction orthogonale à la direction principale de circulation du premier fluide,
   ∘ s'étendre au travers dudit passage du deuxième fluide caloporteur sans empêcher la circulation du deuxième flux de fluide caloporteur entre la deuxième entrée et la deuxième sortie.

Un dispositif d'échange thermique selon l'invention permet notamment d'éviter les déplacements en cisaillement provoqués par les vibrations et qui sont susceptibles d'endommager l'ensemble des plaques internes du dispositif, comme l'assemblage entre les plaques externes et l'armature d'entrée et l'armature de sortie. Les inventeurs ont constaté, de manière tout à fait surprenante, qu'il est possible de disposer des raidisseurs dans le flux de circulation de sortie et/ou d'entrée d'un fluide caloporteur traversant un échangeur de chaleur, sans nuire au fonctionnement de l'échangeur de chaleur et, en fixant les raidisseurs à chacune des armatures d'entrée et de sortie d'un autre fluide caloporteur circulant dans une autre direction que la direction selon laquelle circule le fluide caloporteur au travers duquel sont disposés les raidisseurs, lesdits raidisseurs comprenant au moins une barre de renforcement formant un angle non nul par rapport à la direction principale de circulation du premier fluide. En particulier, un dispositif d'échange thermique selon l'invention présente également pour avantage d'éviter d'avoir à fixer des raidisseurs sur le bloc échangeur.

En outre, dans une variante particulièrement avantageuse d'un dispositif selon l'invention, ledit dispositif raidisseur est également adapté pour augmenter la raideur de l'enceinte de circulation vis-à-vis des déplacements en rotation de l'armature d'entrée et de l'armature de sortie l'un par rapport à l'autre, notamment les déplacements en rotation autour d'un axe parallèle à la direction principale de circulation du premier fluide.

L'invention rend donc inutile l'utilisation de cadres tels que décrits dans US 3 986 549 et GB 2 127 535, ceux-ci ne permettant non seulement pas d'augmenter la raideur de l'enceinte de circulation vis-à-vis des déplacements en translation et en rotation de l'armature d'entrée et de l'armature de sortie l'un par rapport à l'autre et en cisaillement orthogonal par rapport à la direction principale de circulation du premier fluide, puisqu'ils ne présentent aucune barre de renforcement formant un angle non nul par rapport à la direction principale de circulation du premier fluide, mais entraînant en outre une augmentation importante et préjudiciable de la masse de l'échangeur de chaleur.

Par « armature de sortie » et « armature d'entrée », on entend toute structure formant au moins un cadre au niveau ou en regard de ladite sortie ou de ladite entrée et reliant les deux plaques externes entre elles. Chaque armature peut être formée d'une seule pièce ou d'au moins une pièce formée d'un ensemble de portions assemblées entre elles.

Chaque dispositif raidisseur peut être de type tige ou câble s'étendant au moins entre un point de fixation solidaire de l'armature d'entrée et au moins un point de fixation solidaire de l'armature de sortie. Chaque dispositif raidisseur est adapté pour augmenter la raideur de l'enceinte de circulation vis-à-vis des déplacements de l'armature d'entrée et de l'armature de sortie l'un par rapport à l'autre, notamment en cisaillement orthogonal par rapport à la direction principale de circulation du premier fluide. Avantageusement et selon l'invention, chaque dispositif raidisseur présente au moins une extrémité de fixation sur l'armature d'entrée et une extrémité de fixation sur l'armature de sortie. En particulier, il est à noter que, de cette façon, aucun dispositif raidisseur n'a besoin d'être fixé au bloc échangeur disposé dans l'enceinte de circulation, c'est-à-dire que le ou les dispositifs raidisseurs ne sont pas solidairement liés aux plaques du bloc échangeur. Ceci permet de limiter les sollicitations, notamment les vibrations, subies par le bloc échangeur et ainsi d'augmenter la fiabilité et la durée de vie du bloc échangeur (également appelé « faisceau »).

Chaque dispositif raidisseur présente une raideur et une résistance en compression et/ou en traction et/ou en cisaillement apte à augmenter la raideur de l'enceinte de circulation vis-à-vis des déplacements en translation ou en rotation de l'armature d'entrée et de l'armature de sortie l'un par rapport à l'autre. En particulier, chaque dispositif raidisseur est adapté pour présenter une résistance en traction et/ou une résistance en compression au moins entre deux points auxquels il est fixé.

Chaque dispositif raidisseur peut être de type tige ou câble. Dans une variante particulièrement avantageuse d'un dispositif selon l'invention, chaque dispositif raidisseur comprend au moins une barre de renforcement. Une telle barre de renforcement présente à la fois une résistance en compression et une résistance en traction adaptées pour augmenter la raideur de l'enceinte de circulation vis-à-vis des déplacements en translation et en rotation de l'armature d'entrée et de l'armature de sortie l'un par rapport à l'autre.

Avantageusement et selon l'invention, chaque barre de renforcement est disposée de façon à s'étendre entre l'armature d'entrée et l'armature de sortie selon au moins une direction présentant une composante orthogonale à la direction principale de circulation du premier fluide.

Dans une variante particulièrement avantageuse d'un dispositif selon l'invention, chaque dispositif raidisseur, et notamment chaque barre de renforcement, est disposé(e) de façon à s'étendre entre l'armature d'entrée et l'armature de sortie en formant un angle non nul par rapport à la direction principale de circulation du premier fluide. En particulier, chaque dispositif raidisseur, et notamment chaque barre de renforcement, est disposé(e) de façon à s'étendre entre l'armature d'entrée et l'armature de sortie en formant un angle compris entre 5° et 70°, notamment un angle compris entre 10° et 50°, par exemple un angle de 35°, de 40° ou encore de 45°, par rapport à la direction principale de circulation du premier fluide.

Chaque dispositif raidisseur mécaniquement lié à l'armature d'entrée et à l'armature de sortie peut être disposé en particulier au niveau de l'entrée du deuxième fluide caloporteur ou encore au niveau de la sortie du deuxième fluide caloporteur. Un dispositif raidisseur peut également être disposé à l'entrée du deuxième fluide caloporteur et un autre dispositif raidisseur peut être disposé à la sortie du deuxième fluide caloporteur.

Chaque dispositif raidisseur peut-être disposé entre l'armature d'entrée et l'armature de sortie selon un ensemble de configurations variées. Chaque dispositif raidisseur, et notamment la ou les barres de renforcement, peuvent être disposé(e)s entre l'armature d'entrée et l'armature de sortie selon une configuration de type V, X, Y, A, K, ou encore en W..., chaque une barre de renforcement présentant au moins un point de fixation sur l'armature d'entrée et un point de fixation sur l'armature de sortie. Chaque dispositif raidisseur comprend donc au moins une barre de renforcement formant un angle non nul par rapport à la direction principale de circulation du premier fluide.

Dans une variante particulièrement avantageuse d'un dispositif selon l'invention, le dispositif raidisseur comprend deux barres de renforcement disposées en V entre l'armature d'entrée et l'armature de sortie, chaque barre présentant au moins un point de fixation sur l'armature d'entrée et au moins un point de fixation sur l'armature de sortie. La pointe du V peut par exemple être fixée à l'armature de sortie et les deux extrémités libres des ailes du V peuvent être fixées à l'armature d'entrée.

Dans une variante particulièrement avantageuse d'un dispositif selon l'invention, le dispositif raidisseur comprend deux barres de renforcement disposées en X entre l'armature d'entrée et l'armature de sortie, chaque barre présentant au moins un point de fixation sur l'armature d'entrée et au moins un point de fixation sur l'armature de sortie. Deux extrémités libres d'un côté du X sont par exemple fixées à l'armature d'entrée alors que les deux autres extrémités libres du X sont fixées à l'armature de sortie.

Dans une variante particulièrement avantageuse d'un dispositif selon l'invention, le dispositif raidisseur comprend une unique barre de renforcement disposée en diagonale entre l'armature d'entrée et l'armature de sortie, ladite barre présentant au moins un point de fixation sur l'armature d'entrée et au moins un point de fixation sur l'armature de sortie. En d'autres termes, ledit au moins un point de fixation de l'unique barre sur l'armature d'entrée et ledit au moins un point de fixation de l'unique barre sur l'armature de sortie ne sont pas disposées sur une droite parallèle à la direction principale de circulation du premier fluide.

Chaque barre de renforcement peut présenter une section de toute forme, notamment une section circulaire, rectangulaire ou encore carrée. Chaque barre de renforcement peut présenter une section pleine ou creuse. Chaque barre de renforcement peut présenter une section variable ou constante sur toute sa longueur. Chaque barre de renforcement peut être droite et/ou présenter des portions courbes, et par exemple s'étendre à la façon d'un S ou encore à la façon d'un serpentin entre un point de fixation sur l'armature d'entrée et un point de fixation sur l'armature de sortie.

Les extrémités de fixation de chaque dispositif raidisseur, et notamment de chaque barre de renforcement, peuvent être assemblées à l'armature d'entrée et à l'armature de sortie par tout type de liaison non nulle, et en particulier par tout type de liaison comportant au moins trois degrés de liaison en translation. Avantageusement et selon l'invention, chaque dispositif raidisseur est lié à l'armature d'entrée et à l'armature de sortie (via chaque extrémité de fixation) par une liaison choisie dans le groupe formé des liaisons complètes (sans aucun degré de liberté, également appelées encastrements), des liaisons pivot (dont l'axe correspond à la direction selon laquelle s'étend le dispositif raidisseur) et des liaisons rotule (liaisons à point central pouvant être assimilées à trois liaisons pivot d'axes perpendiculaires).

Avantageusement et selon l'invention, le dispositif d'échange thermique selon l'invention est adapté pour permettre la circulation du deuxième fluide caloporteur dans le passage du deuxième fluide caloporteur, selon une direction, dite direction de circulation du deuxième fluide, orthogonale à la direction de circulation du premier fluide. Avantageusement et selon l'invention, le premier fluide caloporteur circule, dans ladite enceinte de circulation, selon une direction, dite direction principale de circulation du premier fluide, s'étendant entre la première entrée et la première sortie, ladite direction de circulation du premier fluide étant orthogonale à la direction, dite direction de circulation du deuxième fluide, selon laquelle circule le deuxième fluide caloporteur, dans ladite enceinte de circulation, entre la deuxième entrée et la deuxième sortie.

Avantageusement et selon l'invention, chaque barre de renforcement est disposée de façon à s'étendre entre l'armature d'entrée et l'armature de sortie selon au moins une direction présentant une composante orthogonale à la direction de circulation du deuxième fluide caloporteur. En particulier, avantageusement et selon l'invention, chaque barre de renforcement est disposée de façon à s'étendre entre l'armature d'entrée et l'armature de sortie selon au moins une direction orthogonale à la fois à la direction principale de circulation du premier fluide caloporteur et à la direction de circulation du deuxième fluide caloporteur.

Avantageusement et selon l'invention, le deuxième fluide caloporteur est adapté pour former un deuxième flux de fluide caloporteur circulant, dans ladite enceinte de circulation, selon la direction de circulation du deuxième fluide, entre la deuxième entrée et la deuxième sortie, ladite direction de circulation du deuxième fluide étant orthogonale à la direction principale de circulation du premier fluide.

Avantageusement et selon l'invention, chaque fluide caloporteur peut être sous forme liquide ou gazeuse. En particulier, l'état du premier fluide caloporteur peut être identique ou différent de l'état du deuxième fluide caloporteur.

Dans chacun des trois modes de réalisation représentés, le premier fluide caloporteur peut correspondre au fluide dont la température est plus importante que la température du deuxième fluide caloporteur ou inversement.

L'enceinte de circulation présente une périphérie fermée étanche aux fluides caloporteurs (au moins en fonctionnement et sans tenir compte des entrées et sorties pour le premier fluide caloporteur et pour le deuxième fluide caloporteur).

Avantageusement et selon l'invention, l'armature d'entrée présente une bouche d'entrée du premier fluide caloporteur dans l'enceinte de circulation. Avantageusement et selon l'invention, l'armature de sortie présente une bouche de sortie du premier fluide caloporteur hors de l'enceinte de circulation. Dans une variante particulièrement avantageuse et selon l'invention, chaque bouche présente un seul orifice formant entrée ou sortie, une ouverture vers l'enceinte de circulation et/ou vers le bloc échangeur à plaques, et une paroi pleine périphérique entre cet orifice et cette ouverture. Chaque orifice de chaque bouche peut être connecté à un conduit d'arrivée ou d'évacuation du premier fluide caloporteur.

Le dispositif d'échange thermique comprend une pluralité de plaques internes, disposées à l'intérieur de l'enceinte de circulation et séparant l'enceinte en une pluralité de zones de circulation du premier fluide caloporteur et en une pluralité de zones de circulation du deuxième fluide caloporteur. Les plaques internes sont disposées parallèlement les unes avec les autres et selon la direction principale de circulation du premier fluide. Le premier fluide caloporteur circule dans des zones de circulation du premier fluide caloporteur entre l'armature d'entrée et l'armature de sortie et le deuxième fluide caloporteur circule dans des zones de circulation du deuxième fluide caloporteur, distinctes des zones de circulation du premier fluide caloporteur, entre la deuxième entrée et la deuxième sortie.

Le bloc échangeur à plaques peut par exemple comprendre au moins un empilement-notamment un et un seul empilement- de plaques séparatives planes entre chacune desquelles sont intercalés des guides-flux sous la forme de tôles ondulées. Le premier et le deuxième fluide caloporteur circulent dans les espaces entre les plaques séparatives et fermés latéralement par des tiges de fermeture. La présence de tels guide-flux est facultative mais permet d'améliorer l'efficacité des échanges thermiques. Des plaques séparatives à cannelures peuvent également être utilisées.

Chaque guide-flux peut présenter une forme ondulée, la hauteur des ondulations étant sensiblement égale à la distance entre plaques séparatives. Ainsi, chaque guide-flux présente une pluralité de zones externes et de zones internes en contact de surface avec la face intérieure respectivement des plaques séparatives. Chaque guide-flux peut présenter une pluralité d'ondulations de façon à former une pluralité de canaux de circulation du premier fluide caloporteur et du deuxième fluide caloporteur dans l'enceinte de circulation. Chaque guide-flux peut présenter un profil ondulé régulièrement selon une forme périodique, par exemple du type sinusoïdal ou crénelé.

Chaque guide-flux peut être solidarisé avec les plaques externes par exemple par brasage ou par soudure.

Le dispositif d'échange thermique selon l'invention peut être formé en au moins un matériau choisi parmi les matériaux métalliques, les matériaux composites, les matériaux polymères, les matériaux céramiques, notamment le graphite, le verre... En particulier, dans un mode de réalisation particulièrement avantageux d'un dispositif d'échange thermique selon l'invention, les carters et les plaques sont formés en matériau métallique, notamment en au moins un matériau choisi dans le groupe formé des aciers, du cuivre, de l'aluminium, des alliages métalliques (superalliages par exemple) et de leurs mélanges.

L'invention s'étend à un système de conditionnement d'air comprenant au moins un dispositif d'échange thermique selon l'invention. Il peut notamment s'agir d'un échangeur sans contact à flux croisés.

L'invention s'étend à un véhicule, notamment un aéronef, comprenant au moins un système de conditionnement d'air selon l'invention.

L'invention concerne aussi un dispositif d'échange thermique, un système de conditionnement d'air et un véhicule comprenant au moins un tel dispositif d'échange thermique caractérisés en combinaison par tout ou partie des caractéristiques mentionnées ci-dessus ou ci-après.

D'autres buts, caractéristiques et avantages de l'invention apparaissent à la lecture de la description suivante d'un de ses modes de réalisation préférentielle donnée à titre d'exemple non limitatif, et qui se réfère aux figures annexées dans lesquelles :
- la figure 1 est une représentation schématique en perspective d'un dispositif d'échange thermique selon l'invention selon un premier mode de réalisation,
- la figure 2 est une représentation schématique d'un dispositif d'échange thermique selon l'invention selon le premier mode de réalisation vu de côté,
- la figure 3 est une représentation schématique en perspective d'un dispositif d'échange thermique selon l'invention selon le premier mode de réalisation,
- la figure 4 est une représentation schématique éclatée d'une partie d'un bloc échangeur à plaques utilisé dans un dispositif d'échange thermique selon l'invention selon le premier mode de réalisation,
- la figure 5 est une représentation schématique éclatée d'un dispositif d'échange thermique selon le premier mode de réalisation,
- la figure 6 est une représentation schématique en perspective d'un dispositif d'échange thermique selon l'invention selon un deuxième mode de réalisation,
- la figure 7 est une représentation schématique en perspective d'un dispositif d'échange thermique selon l'invention selon un troisième mode de réalisation.

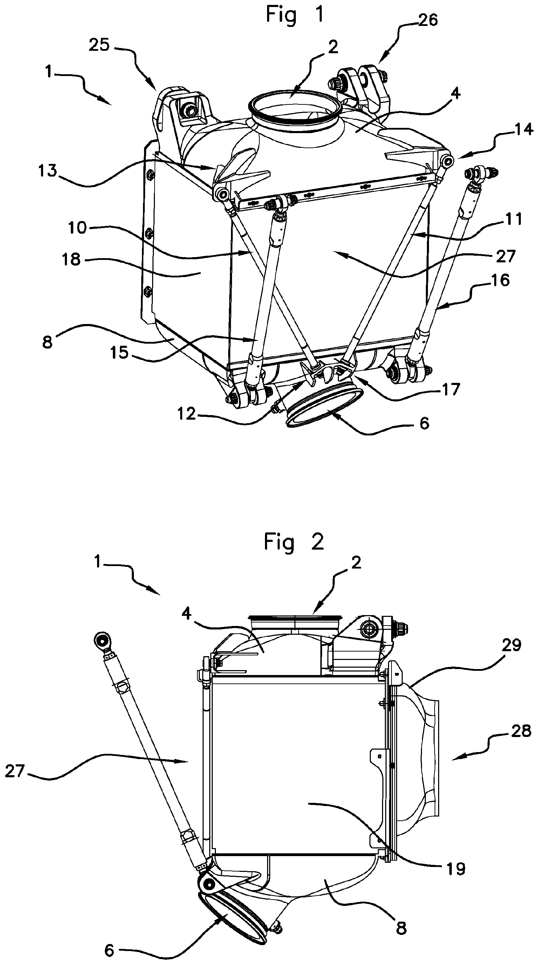

Le dispositif 1 d'échange thermique représenté aux figures 1 à 7 forme notamment une enceinte de circulation de fluide caloporteur délimitée par au moins deux plaques latérales, dites plaques 18, 19 externes. L'enceinte de circulation présente une forme générale de cube dont deux faces opposées sont matérialisées par les plaques 18, 19 externes. Deux autres faces opposées de ce cube sont matérialisées d'une part, par une armature 4 d'entrée et, d'autre part, par une armature 8 de sortie. L'armature 4 d'entrée présente une première entrée 2 et une première sortie 6 d'un premier fluide caloporteur dans l'enceinte de circulation. L'armature 4 d'entrée et l'armature 8 de sortie sont reliées entre elles par chacune des plaques 18, 19 externes. L'armature 4 d'entrée et l'armature 8 de sortie sont disposées face à face, c'est-à-dire dans des plans sensiblement parallèles entre eux. Les plaques 18, 19 externes représentées présentent chacune une forme plane rectangulaire. Les plaques 18, 19 externes sont par exemple formées en acier ou en alliage métallique.

Enfin, les deux autres faces du cube sont ouvertes et forment une deuxième entrée 28 et une deuxième sortie 27 d'un deuxième fluide caloporteur.

Le premier fluide caloporteur forme un premier flux de fluide caloporteur circulant, dans ladite enceinte de circulation, selon une direction, dite direction principale de circulation du premier fluide, entre la première entrée 2 et la première sortie 6. L'armature 4 d'entrée et l'armature 8 de sortie sont adaptées pour permettre la circulation du premier flux de fluide caloporteur dans l'enceinte de circulation selon la direction principale de circulation du premier fluide, entre la première entrée 2 et la première sortie 6, et pour ménager un passage du premier fluide caloporteur.

Le dispositif 1 d'échange thermique comprend un passage du deuxième fluide caloporteur, permettant la circulation d'un flux du deuxième fluide caloporteur dans l'enceinte de circulation entre la deuxième entrée 28 et la deuxième sortie 27. Le deuxième fluide caloporteur circule dans le passage du deuxième fluide caloporteur, selon une direction, dite direction de circulation du deuxième fluide, orthogonale à la direction de circulation du premier fluide.

Dans le premier mode de réalisation du dispositif d'échange thermique représenté aux figures 1 à 3, le dispositif raidisseur comprend deux barres 10, 11 de renforcement disposées en V entre l'armature 4 d'entrée et l'armature 8 de sortie, chaque barre 10, 11 présentant une extrémité de fixation 13, 14 sur l'armature 4 d'entrée et une extrémité de fixation 12, 17 sur l'armature 8 de sortie. Chacune des barres de renforcement forme un angle non nul par rapport à la direction principale de circulation du premier fluide et par rapport à tout plan parallèle aux plans dans lesquels s'étendent les places externes 18, 19. Ceci permet d'augmenter la raideur de l'enceinte de circulation vis-à-vis des déplacements en translation de l'armature 4 d'entrée et de l'armature 8 de sortie l'un par rapport à l'autre selon une direction orthogonale à la direction principale de circulation du premier fluide. Cet angle est par exemple compris entre 20° et 40° par rapport à la direction principale de circulation du premier fluide.

L'extrémité de fixation 13 de la barre 10 est assemblée à l'armature 4 d'entrée par une liaison mécanique. L'extrémité de fixation 12 de la barre 10 est également assemblée à l'armature 8 de sortie par une liaison mécanique.

De même, l'extrémité de fixation 14 de la barre rigide 11 est assemblée à l'armature 4 d'entrée par une liaison mécanique. L'extrémité de fixation 17 de la barre 11 est assemblée à l'armature 8 de sortie par une liaison mécanique.

Dans le premier mode de réalisation représenté aux figures 1 à 3, l'extrémité de fixation 12 d'une barre à l'armature 8 de sortie et l'extrémité de fixation 17 de l'autre barre à l'armature 8 de sortie sont disposées au niveau d'un point de fixation central du bord de l'armature 8 de sortie disposé du côté de la sortie 27 du deuxième fluide caloporteur. Il est possible de déplacer latéralement (selon une direction orthogonale à la direction principale de déplacement du premier fluide) la position de ce point de fixation à l'armature 8 de sortie, de façon à former une configuration en V non symétrique par rapport à un axe vertical passant par la pointe du V. Il en est de même pour la position de chacun des points de fixation des barres 10, 11 à l'armature 4 d'entrée, les extrémités de fixation 13, 14 n'étant pas nécessairement disposées au niveau des coins de l'armature 4 d'entrée.

L'armature 4 d'entrée et l'armature 8 de sortie, tels que représentés dans le mode de réalisation correspondant aux figures 1 à 3, se présentent sous la forme d'un carter d'entrée et d'un carter de sortie formant chacun une enveloppe bombée présentant un orifice. L'armature 4 d'entrée présente une bouche d'entrée (première entrée 2) du premier fluide caloporteur et l'armature 8 de sortie présente une bouche de sortie (première sortie 6) du premier fluide caloporteur. Chaque bouche peut être connectée à un conduit d'arrivée ou d'évacuation (non représenté) du premier fluide caloporteur.

Le dispositif 1 d'échange thermique présente une seule et unique entrée pour le premier fluide caloporteur (c'est-à-dire la bouche d'entrée de l'armature 4 d'entrée) et une seule et unique sortie pour le premier fluide caloporteur (c'est-à-dire la bouche de sortie de l'armature 8 de sortie).

Le dispositif 1 d'échange thermique comprend une pluralité de plaques internes, formant un bloc échangeur, disposées à l'intérieur de l'enceinte de circulation et séparant l'enceinte en une pluralité de zones de circulation du premier fluide caloporteur et en une pluralité de zones de circulation du deuxième fluide caloporteur. Les plaques internes sont disposées parallèlement les unes avec les autres et selon la direction principale de circulation du premier fluide. Le premier fluide caloporteur circule dans des zones de circulation du premier fluide caloporteur entre l'armature 4 d'entrée et l'armature 8 de sortie et le deuxième fluide caloporteur circule dans des zones de circulation du deuxième fluide caloporteur, distinctes des zones de circulation du premier fluide caloporteur, entre la deuxième entrée 28 et la deuxième sortie 27.

Comme on peut le voir sur les figures 1 à 3, un carter 29 est disposé au niveau de la deuxième entrée 28 du deuxième fluide caloporteur.

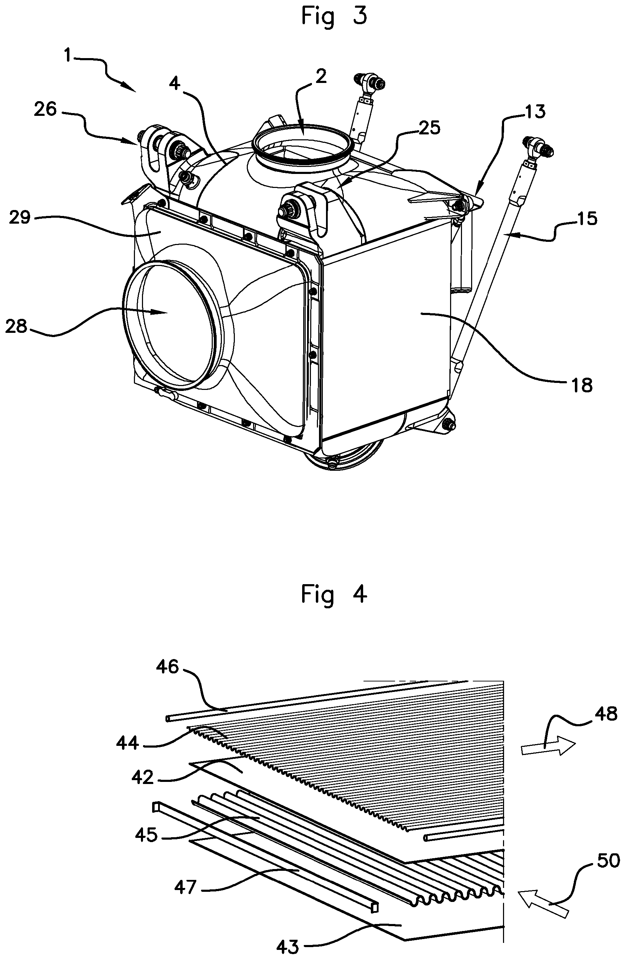

Il est à noter que le bloc échangeur à plaques n'est pas représenté à l'intérieur de l'enceinte de circulation aux figures 1 et 3 et n'est donc pas visible sur la figure 1 au niveau de la deuxième sortie 27 du deuxième fluide caloporteur et en regard des barres 10, 11, ni au niveau de la deuxième entrée 28 du deuxième fluide caloporteur sur la figure 3.

La figure 4 présente une partie, en coupe et en représentation éclatée, d'un bloc échangeur à plaques pouvant être disposé dans un dispositif d'échange thermique selon l'invention. Le bloc échangeur à plaques représenté comprend un empilement de plaques séparatives 42, 43 planes entre chacune desquelles sont intercalées des guides-flux 44, 45 sous la forme de tôles ondulées (également appelées « ondes »). Le premier et le deuxième fluide caloporteur circulent dans les espaces entre les plaques séparatives et fermés latéralement par des tiges 46, 47 de fermeture. Dans le mode de réalisation représenté, le fluide caloporteur présentant la température la plus faible circule dans le sens indiqué par la flèche 50 (au contact du guide-flux 45) et le fluide caloporteur présentant la température la plus haute circule dans le sens indiqué par la flèche 48 (au contact du guide-flux 44).

Chaque guide-flux présente une forme ondulée, la hauteur des ondulations étant sensiblement égale à la distance entre plaques séparatives. Ainsi, chaque guide-flux présente une pluralité de zones externes et de zones internes en contact de surface avec la face intérieure respectivement des plaques séparatives. Chaque guide-flux présente une pluralité d'ondulations de façon à former une pluralité de canaux de circulation du premier fluide caloporteur et du deuxième fluide caloporteur dans l'enceinte de circulation. Chaque guide-flux peut présenter un profil ondulé régulièrement selon une forme périodique, par exemple du type sinusoïdal ou crénelé.

Chaque guide-flux peut être solidarisé avec les plaques externes 18, 19 par une pluralité de contacts surfaciques. Plus particulièrement, les zones (externes et internes) de contact de chaque guide-flux sont avantageusement brasées aux faces intérieures de la plaque externe et de la plaque interne.

Dans l'exemple représenté en figure 4, le parcours du premier et du deuxième flux de fluide caloporteur à l'intérieur du bloc échangeur est rectiligne. Il est bien sûr également possible d'utiliser tout autre type de bloc échangeur à plaques, par exemple dans lequel le flux de l'un et/ou de l'autre du premier ou du deuxième fluide caloporteur suit un parcours en U ou encore en S.

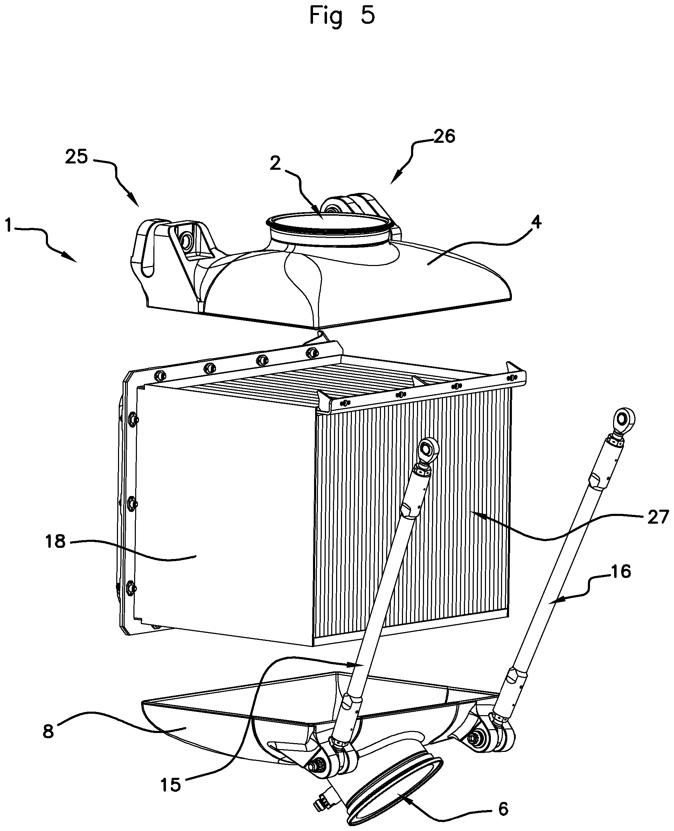

La figure 5 est un vue schématique éclatée d'un dispositif d'échange thermique dans lequel est également représenté le bloc échangeur à plaques disposé à l'intérieur de l'enceinte de circulation. Pour plus de netteté, les guides-flux ne sont pas représentés sur la figure 5 mais ceux-ci sont présents entre chaque plaque séparative sur toute la longueur des plaques.

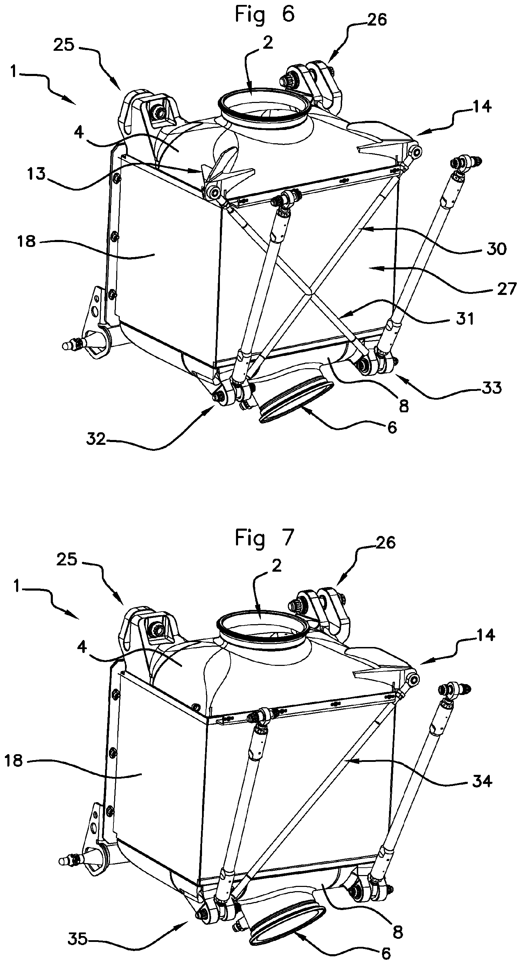

Dans un deuxième mode de réalisation du dispositif 1 d'échange thermique représenté à la figure 6, le dispositif raidisseur comprend deux barres 30, 31 de renforcement disposées en X entre l'armature 4 d'entrée et l'armature 8 de sortie, chaque barre présentant une extrémité de fixation 13, 14 sur l'armature 4 d'entrée et une extrémité de fixation sur l'armature 8 de sortie. Chacune des barres de renforcement forme un angle non nul par rapport à la direction principale de circulation du premier fluide et par rapport à tout plan parallèle aux plans dans lesquels s'étendent les places externes 18, 19. Ceci permet d'augmenter la raideur de l'enceinte de circulation vis-à-vis des déplacements en translation de l'armature 4 d'entrée et de l'armature 8 de sortie l'un par rapport à l'autre selon une direction orthogonale à la direction principale de circulation du premier fluide. Cet angle est par exemple compris entre 25° et 45° par rapport à la direction principale de circulation du premier fluide.

L'extrémité de fixation 13 de la barre 31 est assemblée à l'armature 4 d'entrée par une liaison mécanique. L'extrémité de fixation 33 de la barre 31 est également assemblée à l'armature 8 de sortie par une liaison mécanique.

De même, l'extrémité de fixation 14 de la barre 30 est assemblée à l'armature 4 d'entrée par une liaison mécanique. L'extrémité de fixation 32 de la barre 30 est assemblée à l'armature 8 de sortie par une liaison mécanique.

Dans un troisième mode de réalisation du dispositif 1 d'échange thermique représenté à la figure 7, le dispositif raidisseur comprend une unique barre 34 de renforcement disposée en diagonale entre l'armature 4 d'entrée et l'armature 8 de sortie, ladite barre 34 présentant une extrémité de fixation 14 sur l'armature 4 d'entrée et une extrémité de fixation sur l'armature 8 de sortie. La barre de renforcement forme un angle non nul par rapport à la direction principale de circulation du premier fluide et par rapport à tout plan parallèle aux plans dans lesquels s'étendent les places externes 18, 19. Ceci permet d'augmenter la raideur de l'enceinte de circulation vis-à-vis des déplacements en translation de l'armature 4 d'entrée et de l'armature 8 de sortie l'un par rapport à l'autre selon une direction orthogonale à la direction principale de circulation du premier fluide. Cet angle est par exemple compris entre 25° et 45° par rapport à la direction principale de circulation du premier fluide.

L'extrémité de fixation 14 de la barre 34 est assemblée à l'armature 4 d'entrée par une liaison rotule. L'extrémité de fixation 35 de la barre 34 est assemblée à l'armature 8 de sortie par une liaison rotule.

Les barres 10, 11, 30, 31, 34 de renforcement s'étendent au travers du deuxième flux de fluide caloporteur sans entraver la circulation du deuxième flux de fluide caloporteur entre la première entrée et la première sortie. Dans chacun des trois modes de réalisation représentés, les barres 10, 11, 30, 31, 34 permettent d'empêcher, ou au moins permettent de limiter les déplacements en translation de l'armature 4 d'entrée et de l'armature 8 de sortie l'un par rapport à l'autre selon une direction orthogonale à la direction principale de circulation du premier fluide. Ceci est en particulier dû à la présence d'au moins une barre de renforcement disposée de façon à s'étendre entre l'armature 4 d'entrée et l'armature 8 de sortie en formant un angle non nul par rapport à la direction principale de circulation du premier fluide.

Dans les trois modes de réalisation représentés aux figures 1 à 7, les barres de renforcement s'étendent au travers du flux de sortie du deuxième fluide caloporteur. Toutefois, en combinaison ou en alternative, il est bien sûr également possible de prévoir des barres de renforcement disposées dans le flux d'entrée du deuxième fluide caloporteur, par exemple des barres uniquement disposées au travers du flux d'entrée du deuxième fluide caloporteur. Dans une autre variante de réalisation non représentée, le dispositif raidisseur, formé de barres de renforcement ou autre, peut également être disposé à l'intérieur d'un carter (par exemple dans le carter 29 de la deuxième entrée du deuxième fluide caloporteur).

Dans chacun des trois modes de réalisation représentés, le dispositif 1 d'échange thermique présente des organes de connexion permettant la fixation du dispositif à un aéronef sans nécessiter une quelconque modification de l'installation prévue pour ce faire avec d'autres dispositifs d'échange thermique connus. Cet aspect est très intéressant dans le domaine des systèmes de conditionnement d'air pour aéronefs. L'armature 4 d'entrée présente des fixations 25, 26 permettant de fixer le dispositif d'échange thermique à un aéronef. L'armature 8 de sortie présente deux bras 15, 16 de connexion permettant de fixer le dispositif d'échange thermique à un aéronef.

Les extrémités de fixation des barres formant les dispositifs raidisseurs peuvent être assemblés à l'armature d'entrée et à l'armature de sortie par des liaisons fixes (sans aucun degré de liberté), des liaisons de type pivot ou encore des liaisons de type rotule (liaison à point central pouvant être assimilée à trois liaisons pivot d'axes perpendiculaires).

L'invention peut faire l'objet de très nombreuses variantes de réalisation. En particulier, rien n'empêche de prévoir un dispositif raidisseur dans le flux d'entrée du deuxième fluide caloporteur et un dispositif raidisseur dans le flux de sortie du deuxième fluide caloporteur. Rien n'empêche également de prévoir d'autres configurations de barres de renforcement entre l'armature d'entrée et l'armature de sortie que les modes de réalisation représentés, notamment des dispositifs raidisseurs constitués de plus de deux barres.

## Revendications

1. Dispositif (1) d'échange thermique comprenant :
- une enceinte de circulation délimitée par au moins deux plaques latérales, dites plaques (18, 19) externes,
- une armature (4) d'entrée, présentant au moins une entrée, dite première entrée (2), d'un premier fluide caloporteur dans l'enceinte de circulation,
- une armature (8) de sortie, présentant au moins une sortie, dite première sortie (6), du premier fluide caloporteur hors de l'enceinte,
l'armature (4) d'entrée et l'armature (8) de sortie étant reliées entre elles par chacune des plaques (18, 19) externes et adaptées pour permettre la circulation d'un premier flux de fluide caloporteur dans ladite enceinte de circulation selon une direction, dite direction principale de circulation du premier fluide, entre la première entrée (2) et la première sortie (6),
- une deuxième entrée (28), entre l'armature (4) d'entrée et l'armature (8) de sortie, d'un deuxième fluide caloporteur dans l'enceinte de circulation,
- une deuxième sortie (27), entre l'armature (4) d'entrée et l'armature (8) de sortie, du deuxième fluide caloporteur hors de l'enceinte de circulation,
- un passage, dit passage du deuxième fluide caloporteur, permettant la circulation d'un flux du deuxième fluide caloporteur dans l'enceinte de circulation entre la deuxième entrée (28) et la deuxième sortie (27),
- un bloc échangeur à plaques disposé dans l'enceinte de circulation de façon à être en communication de fluide avec les entrées et les sorties pour permettre la circulation du premier fluide caloporteur et du deuxième fluide caloporteur dans et à travers ce bloc échangeur et le transfert de calories entre eux, comprenant au moins un dispositif raidisseur dudit dispositif d'échange thermique, ledit dispositif raidisseur :
- reliant mécaniquement l'armature (4) d'entrée et l'armature (8) de sortie, **caractérisé en ce qu'**il comprend au moins une barre de renforcement disposée de façon à s'étendre entre l'armature (4) d'entrée et l'armature (8) de sortie en formant un angle non nul par rapport à la direction principale de circulation du premier fluide, chaque barre présentant au moins un point de fixation sur l'armature d'entrée et au moins un point de fixation sur l'armature de sortie,
- étant adapté pour :
∘ augmenter la raideur de l'enceinte de circulation vis-à-vis des déplacements en translation de l'armature (4) d'entrée et de l'armature (8) de sortie l'un par rapport à l'autre selon une direction orthogonale à la direction principale de circulation du premier fluide,
∘ s'étendre au travers dudit passage du deuxième fluide caloporteur sans empêcher la circulation du deuxième flux de fluide caloporteur entre la deuxième entrée (2) et la deuxième sortie (6).

2. Dispositif selon la revendication 1, **caractérisé en ce que** chaque dispositif raidisseur présente au moins une extrémité de fixation sur l'armature (4) d'entrée et une extrémité de fixation sur l'armature (8) de sortie.

3. Dispositif selon la revendication 2, **caractérisé en ce que** chaque dispositif raidisseur est disposé de façon à s'étendre entre l'armature (4) d'entrée et l'armature (8) de sortie selon au moins une direction présentant une composante orthogonale à la direction principale de circulation du premier fluide.

4. Dispositif selon la revendication 2, **caractérisé en ce que** chaque barre de renforcement est disposée de façon à s'étendre entre l'armature (4) d'entrée et l'armature (8) de sortie en formant un angle compris entre 5° et 70° par rapport à la direction principale de circulation du premier fluide.

5. Dispositif selon l'une des revendications 1 à 4, **caractérisé en ce que** chaque barre de renforcement est disposée de façon à s'étendre entre l'armature (4) d'entrée et l'armature (8) de sortie en formant un angle compris entre 10° et 50° par rapport à la direction principale de circulation du premier fluide.

6. Dispositif selon l'une des revendications 1 à 5, **caractérisé en ce que** le dispositif raidisseur comprend deux barres (10, 11) de renforcement disposées en V entre l'armature (4) d'entrée et l'armature (8) de sortie, chaque barre (10, 11) présentant au moins un point de fixation sur l'armature (4) d'entrée et au moins un point de fixation sur l'armature (8) de sortie.

7. Dispositif selon l'une des revendications 1 à 5, **caractérisé en ce que** le dispositif raidisseur comprend deux barres (30, 31) de renforcement disposées en X entre l'armature (4) d'entrée et l'armature (8) de sortie, chaque barre présentant au moins un point de fixation sur l'armature (4) d'entrée et au moins un point de fixation sur l'armature (8) de sortie.

8. Dispositif selon l'une des revendications 1 à 5, **caractérisé en ce que** le dispositif raidisseur comprend une unique barre (34) de renforcement disposée en diagonale entre l'armature (4) d'entrée et l'armature (8) de sortie, ladite barre (34) présentant au moins un point de fixation sur l'armature (4) d'entrée et au moins un point de fixation sur l'armature (8) de sortie.

9. Dispositif selon l'une des revendications 1 à 8, **caractérisé en ce que** chaque barre de renforcement dudit dispositif raidisseur est liée à l'armature d'entrée et à l'armature de sortie par une liaison choisie dans le groupe formé des liaisons complètes, des liaisons pivot et des liaisons rotule.

10. Dispositif selon l'une des revendications 1 à 9, **caractérisé en ce qu'**il est adapté pour permettre la circulation du deuxième fluide caloporteur dans le passage du deuxième fluide caloporteur, selon une direction, dite direction de circulation du deuxième fluide, orthogonale à la direction de circulation du premier fluide.

11. Dispositif selon l'une des revendications 1 à 10, **caractérisé en ce que** l'armature (4) d'entrée présente une bouche d'entrée du premier fluide caloporteur dans l'enceinte de circulation.

12. Dispositif selon l'une des revendications 1 à 11, **caractérisé en ce que** l'armature (8) de sortie présente une bouche de sortie du premier fluide caloporteur hors de l'enceinte de circulation.

13. Système de conditionnement d'air **caractérisé en ce qu'**il comprend au moins un dispositif d'échange thermique selon l'une des revendications 1 à 12.

14. Véhicule -notamment aéronef- **caractérisé en ce qu'**il comprend au moins un système de conditionnement d'air selon la revendication 13.

## Patentansprüche

1. Wärmetauschvorrichtung (1), umfassend:
- ein Zirkulationsgehäuse, das durch mindestens zwei seitliche Platten, äußere Platten (18, 19) genannt, begrenzt ist,
- eine Eingangsarmatur (4), die mindestens einen Eingang, erster Eingang (2) genannt, eines ersten Wärmeträgerfluids in das Zirkulationsgehäuse aufweist,
- eine Ausgangsarmatur (8), die mindestens einen Ausgang, erster Ausgang (6) genannt, eines Wärmeträgerfluids aus dem Zirkulationsgehäuse heraus aufweist,
wobei die Eingangsarmatur (4) und die Ausgangsarmatur (8) durch jede der äußeren Platten (18, 19) miteinander verbunden sind, und ausgeführt sind, um die Zirkulation eines ersten Wärmeträgerfluidstroms in dem Zirkulationsgehäuse in einer Richtung, Hauptzirkulationsrichtung des ersten Fluids genannt, zwischen dem ersten Eingang (2) und dem ersten Ausgang (6) zu ermöglichen,
- einen zweiten Eingang (28) zwischen der Eingangsarmatur (4) und der Ausgangsarmatur (8) eines zweiten Wärmeträgerfluids in das Zirkulationsgehäuse,
- einen zweiten Ausgang (27) zwischen der Eingangsarmatur (4) und der Ausgangsarmatur (8) des zweiten Wärmeträgerfluids aus dem Zirkulationsgehäuse heraus,
- einen Durchgang, Durchgang des zweiten Wärmeträgerfluids genannt, der die Zirkulation eines zweiten Wärmeträgerfluidstroms in dem Zirkulationsgehäuse zwischen dem zweiten Eingang (28) und dem zweiten Ausgang (27) erlaubt,
- einen Plattentauscherblock, der in dem Zirkulationsgehäuse angeordnet ist, um in Fluidkommunikation mit den Eingängen und den Ausgängen zu sein, um die Zirkulation des ersten Wärmeträgerfluids und des zweiten Wärmeträgerfluids in und durch diesen Tauscherblock und den Kalorientransfer zwischen diesen zu erlauben,
mindestens eine Versteifungsvorrichtung der Wärmetauschvorrichtung umfassend, wobei die Versteifungsvorrichtung:
- die Eingangsarmatur (4) und die Ausgangsarmatur (8) mechanisch verbindet,
**dadurch gekennzeichnet, dass** sie mindestens eine Verstärkungsstange umfasst, die derart angeordnet ist, um sich zwischen der Eingangsarmatur (4) und der Ausgangsarmatur (8) durch Bilden eines Winkels ungleich null in Bezug auf die Hauptzirkulationsrichtung des ersten Fluids zu erstrecken, wobei jede Stange mindestens einen Befestigungspunkt an der Eingangsarmatur und mindestens einen Befestigungspunkt an der Ausgangsarmatur aufweist,
- ausgeführt, um:
∘ die Steifigkeit des Zirkulationsgehäuses gegenüber Translationsbewegungen der Eingangsarmatur (4) und der Ausgangsarmatur (8) zueinander in einer orthogonalen Richtung zur Hauptzirkulationsrichtung des ersten Fluids, zu erhöhen,
∘ sich durch den Durchgang des zweiten Wärmeträgerfluids zu erstrecken, ohne die Zirkulation des zweiten Wärmeträgerfluidstroms zwischen dem zweiten Eingang (2) und dem zweiten Ausgang (6) zu verhindern.

2. Vorrichtung nach Anspruch 1, **dadurch gekennzeichnet, dass** jede Versteifungsvorrichtung mindestens ein Befestigungsende an der Eingangsarmatur (4) und ein Befestigungsende an der Ausgangsarmatur (8) aufweist.

3. Vorrichtung nach Anspruch 2, **dadurch gekennzeichnet, dass** jede Versteifungsvorrichtung derart angeordnet ist, um sich zwischen der Eingangsarmatur (4) und der Ausgangsarmatur (8) in mindestens einer Richtung zu erstrecken, die eine orthogonale Komponente zur Hauptzirkulationsrichtung des ersten Fluids aufweist.

4. Vorrichtung nach Anspruch 2, **dadurch gekennzeichnet, dass** jede Verstärkungsstange derart angeordnet ist, um sich zwischen der Eingangsarmatur (4) und der Ausgangsarmatur (8) durch Bilden eines Winkels zu erstrecken, der zwischen 5° und 70° in Bezug auf die Hauptzirkulationsrichtung des ersten Fluids enthalten ist.

5. Vorrichtung nach einem der Ansprüche 1 bis 4, **dadurch gekennzeichnet, dass** jede Verstärkungsstange derart angeordnet ist, um sich zwischen der Eingangsarmatur (4) und der Ausgangsarmatur (8) durch Bilden eines Winkels zu erstrecken, der zwischen 10° und 50° in Bezug auf die Hauptzirkulationsrichtung des ersten Fluids enthalten ist.

6. Vorrichtung nach einem der Ansprüche 1 bis 5, **dadurch gekennzeichnet, dass** die Versteifungsvorrichtung zwei Verstärkungsstangen (10, 11) umfasst, die als V zwischen der Eingangsarmatur (4) und der Ausgangsarmatur (8) angeordnet sind, wobei jede Stange (10, 11) mindestens einen Befestigungspunkt an der Eingangsarmatur (4) und mindestens einen Befestigungspunkt an der Ausgangsarmatur (8) aufweist.

7. Vorrichtung nach einem der Ansprüche 1 bis 5, **dadurch gekennzeichnet, dass** die Versteifungsvorrichtung zwei Verstärkungsstangen (30, 31) umfasst, die als X zwischen der Eingangsarmatur (4) und der Ausgangsarmatur (8) angeordnet sind, wobei jede Stange mindestens einen Befestigungspunkt an der Eingangsarmatur (4) und mindestens einen Befestigungspunkt an der Ausgangsarmatur (8) aufweist.

8. Vorrichtung nach einem der Ansprüche 1 bis 5, **dadurch gekennzeichnet, dass** die Versteifungsvorrichtung eine einzige Verstärkungsstange (34) umfasst, die als Diagonale zwischen der Eingangsarmatur (4) und der Ausgangsarmatur (8) angeordnet sind, wobei die Stange (34) mindestens einen Befestigungspunkt an der Eingangsarmatur (4) und mindestens einen Befestigungspunkt an der Ausgangsarmatur (8) aufweist.

9. Vorrichtung nach einem der Ansprüche 1 bis 8, **dadurch gekennzeichnet, dass** jede Verstärkungsstange der Versteifungsvorrichtung mit der Eingangsarmatur und der Ausgangsarmatur durch eine Verbindung verbunden ist, die aus der Gruppe ausgewählt ist, die aus den kompletten Verbindungen, der Schwenkverbindungen und Kugelgelenkverbindungen gebildet ist.

10. Vorrichtung nach einem der Ansprüche 1 bis 9, **dadurch gekennzeichnet, dass** sie ausgeführt ist, um die Zirkulation des zweiten Wärmeträgerfluids in dem Durchgang des zweiten Wärmeträgerfluids in einer Richtung, Zirkulationsrichtung des zweiten Fluids, orthogonal zur Zirkulationsrichtung des ersten Fluids zu erlauben.

11. Vorrichtung nach einem der Ansprüche 1 bis 10, **dadurch gekennzeichnet, dass** die Eingangsarmatur (4) eine Eingangsöffnung des ersten Wärmeträgerfluids in das Zirkulationsgehäuse aufweist.

12. Vorrichtung nach einem der Ansprüche 1 bis 11, **dadurch gekennzeichnet, dass** die Ausgangsarmatur (8) eine Ausgangsöffnung des ersten Wärmeträgerfluids aus dem Zirkulationsgehäuse heraus aufweist.

13. Luftkonditionierungssystem, **dadurch gekennzeichnet, dass** es mindestens eine Wärmetauschvorrichtung nach einem der Ansprüche 1 bis 12 umfasst.

14. Fahrzeug - insbesondere Luftfahrzeug - **dadurch gekennzeichnet, dass** es mindestens ein Luftkonditionierungssystem nach Anspruch 13 umfasst.

## Claims

1. Heat exchange device (1) comprising:
- a circulation enclosure delimited by at least two side plates, called external plates (18, 19),
- an inlet frame (4), having at least one inlet, called first inlet (2), of a first heat transfer fluid in the circulation enclosure,
- an outlet frame (8), having at least one outlet, called first outlet (6), of the first heat transfer fluid outside the enclosure,
the inlet frame (4) and the outlet frame (8) being interconnected by each of the external plates (18, 19) and adapted to allow the circulation of a first flow of heat transfer fluid in said circulation enclosure in one direction, called the main direction of circulation of the first fluid, between the first inlet (2) and the first exit (6),
- a second inlet (28), between the inlet frame (4) and the outlet frame (8), of a second heat transfer fluid in the circulation enclosure,
- a second outlet (27), between the inlet frame (4) and the outlet frame (8), of the second heat transfer fluid outside the circulation enclosure,
- a passage, called passage of the second heat transfer fluid, allowing the circulation of a flow of the second heat transfer fluid in the circulation enclosure between the second inlet (28) and the second outlet (27),
- a plate exchanger block arranged in the circulation enclosure so as to be in fluid communication with the inlets and the outlets to allow the circulation of the first heat transfer fluid and the second heat transfer fluid in and through this exchanger block and the transfer of calories between them, comprising at least one stiffening device of said heat exchange device, said stiffening device:
- mechanically connecting the input frame (4) and the output frame (8),
**characterised in that** it comprises at least one reinforcing bar arranged so as to extend between the input frame (4) and the output frame (8) forming a non-zero angle with respect to the main direction of flow of the first fluid, each bar having at least one point of attachment to the inlet frame and at least one point of attachment to the outlet frame,
- being adapted to:
∘ increase the stiffness of the circulation enclosure with respect to the translational movements of the input frame (4) and of the output frame (8) relative to each other in a direction orthogonal to the main direction of circulation of the first fluid,
∘ extend through said passage of the second heat transfer fluid without preventing the circulation of the second flow of heat transfer fluid between the second inlet (2) and the second outlet (6).

2. Device according to claim 1, **characterised in that** each stiffening device has at least one end for fixing to the inlet frame (4) and one end for fixing to the outlet frame (8) .

3. Device according to claim 2, **characterised in that** each stiffening device is arranged so as to extend between the input frame (4) and the output frame (8) in at least one direction having a component orthogonal to the main direction of circulation of the first fluid.

4. Device according to claim 2, **characterised in that** each reinforcing bar is arranged so as to extend between the inlet frame (4) and the outlet frame (8) forming an angle of between 5° and 70° relative to the main direction of circulation of the first fluid.

5. Device according to one of claims 1 to 4, **characterised in that** each reinforcing bar is arranged so as to extend between the inlet frame (4) and the outlet frame (8) forming an angle between 10° and 50° relative to the main direction of circulation of the first fluid.

6. Device according to one of claims 1 to 5, **characterised in that** the stiffening device comprises two reinforcing bars (10, 11) arranged in a V-shape between the input frame (4) and the output frame (8), each bar (10, 11) having at least one attachment point on the input frame (4) and at least one attachment point on the output frame (8).

7. Device according to one of claims 1 to 5, **characterised in that** the stiffening device comprises two reinforcing bars (30, 31) arranged in X between the input frame (4) and the output frame (8), each bar having at least one point of attachment to the input frame (4) and at least one point of attachment to the output frame (8).

8. Device according to one of claims 1 to 5, **characterised in that** the stiffening device comprises a single reinforcing bar (34) arranged diagonally between the input frame (4) and the output frame (8), said bar (34) having at least one point of attachment to the input frame (4) and at least one point of attachment to the output frame (8).

9. Device according to one of claims 1 to 8, **characterised in that** each reinforcing bar of said stiffening device is linked to the input reinforcement and the output reinforcement by a link chosen from the group formed of complete links, pivot links and ball joints.

10. Device according to one of claims 1 to 9, **characterised in that** it is adapted to allow the circulation of the second heat transfer fluid in the passage of the second heat transfer fluid, in a direction, called the direction of circulation of the second fluid, orthogonal to the direction of flow of the first fluid.

11. Device according to one of claims 1 to 10, **characterised in that** the inlet frame (4) has an inlet mouth for the first heat transfer fluid in the circulation enclosure.

12. Device according to one of claims 1 to 11, **characterised in that** the outlet frame (8) has an outlet for the first heat transfer fluid outside the circulation enclosure.

13. Air conditioning system **characterised in that** it comprises at least one heat exchange device according to one of claims 1 to 12.

14. Vehicle - in particular an aircraft - **characterised in that** it comprises at least one air conditioning system according to claim 13.
